# EUROPEAN PATENT APPLICATION

(11) **EP 1 258 413 A2**
(43) Date of publication of application: **20.11.2002**
(21) Application number: 01127719.1
(22) Date of filing: 21.11.2001
(51) Int. Cl.: B62B 7/06

(54) **Folding baby carriage**

(30) Priority: 18.05.2001 JP 2001149795
(71) Applicant: Katoji Co., Ltd., Inuyama, Aichi 484-0894 (JP)
(72) Inventor: Eguchi, Yusaku, Konan-shi, Aichi 483-8161 (JP); Murase, Yoichi, Nagoya-shi, Aichi 458-0812 (JP)
(74) Representative: Leson, Thomas Johannes Alois, Dipl.-Ing.

(57) **Abstract**

A folding baby carriage comprising a self-supported leg (20) attached to the lower portion of the rear leg levers (5) so that it can be let off to ground on the earth.

## Description

The present invention relates to a folding baby carriage for carrying a baby thereon.

In the prior art, the baby carriage, as folded generally in parallel with hand levers by turning front leg levers supporting the front wheels upward, is usefully employed because it is made longitudinally slim when folded. In addition to this slim shape, the grips, as attached to the upper portions of the hand levers, are formed to have the shape of the handles of an umbrella, so that the folding baby carriage is generally called the "umbrella type". Even if this folding baby carriage is in its folded state, it can be easily moved, when its grips are gripped and its hand levers are pushed or pulled, on the turning rear wheels left on the earth.

In this folding baby carriage folded when unused, however, what grounds on the earth is only the rear wheels. Therefore, the baby carriage cannot support itself but is either left in a horizontal position or laid on the wall or the like. In the horizontal position, the baby carriage is blotted outside of the house and blots the interior of the house. When laid on the wall or the like, on the other hand, the baby carriage also blots the wall and falls down when a small external force or vibration is applied, to cause a problem that it or its surrounding article is broken.

An object of the invention is to provide a folding baby carriage which can support itself when its front leg levers are turned upward and folded generally in parallel with its hand levers.

In order to achieve the above-specified object, according to the invention, there is provided a folding baby carriage comprising: a pair of front leg levers hinged turnably to be folded to the lower portions of a pair of hand levers for supporting a pair of front wheels; and a pair of rear leg levers hinged turnably to be folded to the lower portions of the paired hand levers for supporting a pair of rear wheels, the front leg levers being turned upward so that they are folded generally in parallel with the hand levers, and the rear leg levers being turned downward so that they are folded generally in parallel with the hand levers, wherein the improvement comprises a self-supported leg attached to the lower portion of the rear leg levers so that it can be let off to ground on the earth.

Here, it is preferred that the paired front leg levers are folded to approach widthwise each other and that the paired rear leg levers are folded to approach widthwise each other. Then, the baby carriage can be made not only longitudinally slim when folded but also widthwise to reduce the space for the occupation space of the baby carriage more when the baby carriage supports itself.

On the other hand, it is arbitrary [1] that the self-supported leg can be let off to ground on the earth which is on the side opposed to the front wheels, which are raised by the folding operation, with respect to the hand levers. In other words, the self-supported leg can be let off backward from the rear leg levers to ground on the earth behind the rear leg levers. And it is preferred [2] that the self-supported leg can be let off to ground on the earth which is on the same side as the front wheels, which are raised by the folding operation, with respect to the hand levers. In other words, the self-supported leg can be let off forward from the rear leg levers to ground on the earth in front of the rear leg levers. In the case [1], the baby carriage has to be supported by itself at an inclination. In the case [2], on the other hand, the baby carriage can be supported by itself in a generally vertical position to reduce the occupation space more.

The difference between the cases [1] and [2] is caused by the fact that when the front leg levers are turned upward and folded generally in parallel with the hand levers, the center of gravity of the baby carriage is shifted to the front wheels with respect to the hand levers, by the weight of the front wheels. In the case [1] of the self-supported leg, the baby carriage has to be so inclined for that shift of the center of gravity as to bring the front wheels generally to above the rear wheels. In the case [2] of the self-supported leg, however, the self-supported leg can be positioned generally below the front wheels so that the baby carriage (or the hand levers) need not be substantially inclined.

On the other hand, it is arbitrary that the self-supported leg is attached to the lower portion of each of the paired rear leg levers, but the self-supported leg may be attached to the lower portion of one of the paired rear leg levers. In this latter case, only one self-supported leg can suffice the letting-off and grounding operation. In the latter case, on the other hand, it is preferred that the grounding portion of the self-supported leg attached to one of the rear leg levers is shaped and extended toward the other rear leg lever. This is because the self-support can be made stabler.

On the other hand, it is arbitrary that the self-supported leg is let off to ground by letting off itself manually by the user to bring its grounding portion into the grounding position, or that the self-supported leg is let off to ground such that the self-supported leg is automatically let off to ground on the earth responsively to the folding operation (or responsively as the rear leg levers are turned downward and folded generally in parallel with the hand levers).

Further objects of this invention will become evident upon an understanding of the illustrative embodiments described below. Various advantages not specifically referred to herein but within the scope of the instant invention will occur to one skilled in the art upon practice of the presently disclosed invention. The following examples and embodiments are illustrative and not seen to limit the scope of the invention.
FIG. 1 is a perspective view showing the state in which a folding baby carriage according to an embodiment of the invention is extended for use;
FIG. 2 is a perspective view of an intermediate state in which the same baby carriage is being folded when unused;
FIG. 3 is a perspective view showing the state in which the same baby carriage is folded when unused;
FIG. 4A is a perspective view of a case showing a modification of the embodiment, in which a leg trunk is fixed in a transverse position; and
FIG. 4B is a perspective view of another case showing a modification of the embodiment, in which a lever is used in place of a leg supporting portion.

Embodiments of a folding baby carriage according to the invention will be described with reference to the accompanying drawings. A folding baby carriage 1 of this embodiment is well known in the art as the folding baby carriage excepting its self-supported leg.

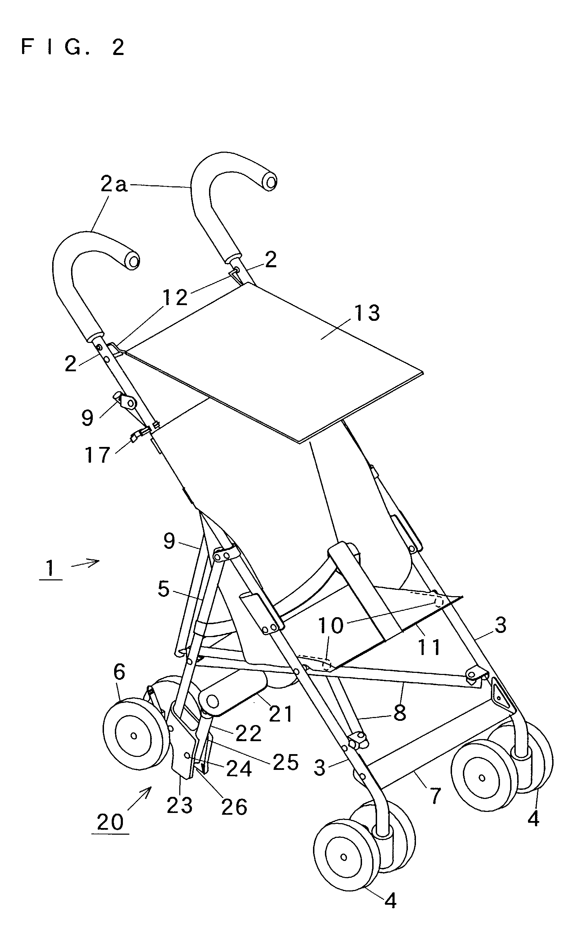

In the entire construction shown in FIG. 2, the folding baby carriage 1 is provided over a pair of hand levers 2 and 2 with a grips 2a and 2a having a shape of the handle of an umbrella. To the lower end portions of the hand levers 2 and 2, there are individually so turnably hinged a pair of front leg levers 3 and 3 which extend obliquely forward and downward as can be folded. A set of front wheels 4 and 4 are individually attached to the lower end portions of the individual front leg levers 3 and 3. To the lower portions of the hand levers 2 and 2 and slightly over the hinged portions of the front leg levers 3 and 3, there are individually so turnably hinged a pair of rear leg levers 5 and 5 which extend obliquely backward and downward as can be folded. A set of rear wheels 6 and 6 are individually attached to the lower end portions of the individual rear leg levers 5 and 5.

Between the intermediate portion of one front leg lever 3 and the intermediate portion of the rear leg lever 5, as opposed to the rear leg lever 5 positioned at the back of said front leg lever 3, and between the intermediate portion of the other front leg lever 3 and the intermediate portion of the rear leg lever 5, as opposed to the rear leg lever 5 positioned at the back of said front leg lever 3, there are mounted a pair of first cross bars 8 and 8 which are crossed at their central portions and turnably hinged to each other and which are turnably hinged at their one-end portions to the individual levers. Between the upper portion of one hand lever 2 and the intermediate portion of the rear leg lever 5, as opposed to the rear leg lever 5 positioned at the back of said hand lever 2, and between the upper portion of the other hand lever 2 and the intermediate portion of the rear leg lever 5, as opposed to the rear leg lever 5 positioned at the back of said hand lever 2, there are mounted a pair of second cross bars 9 and 9 which are crossed at their central portions and turnably hinged to each other and which are turnably hinged at their one-end portions to the individual levers.

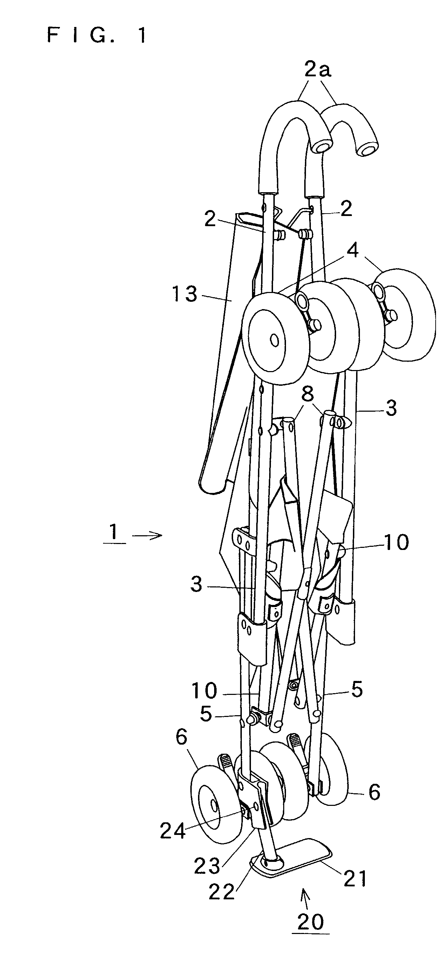

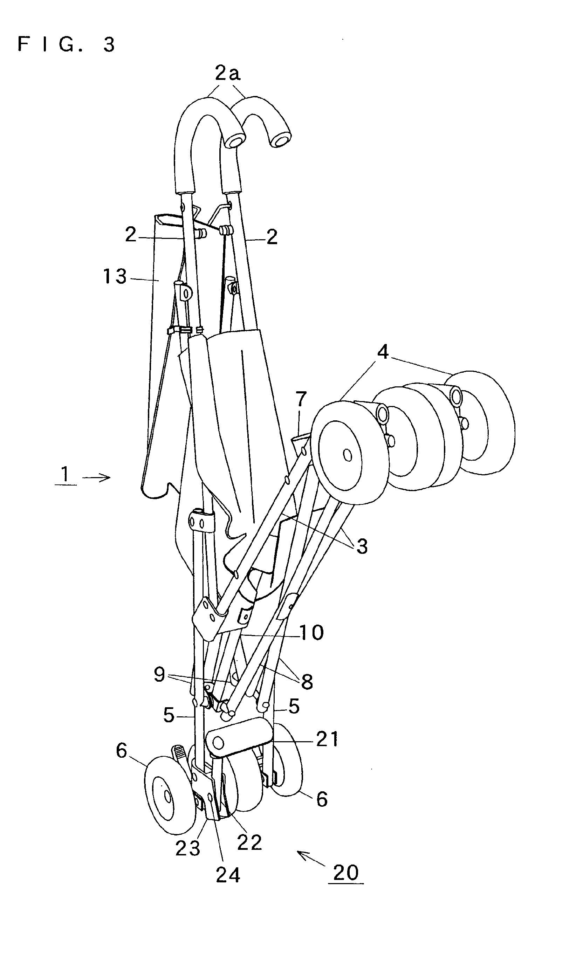

At the folding time when the front leg levers 3 and 3 are turned upward and are folded generally in parallel with the hand levers 2 and 2, as shown in the changing states of FIG. 2 → FIG. 3 → FIG. 1, the rear leg levers 5 and 5 are automatically turned downward and folded generally in parallel with the hand levers 2 and 2 by the tensing actions of the first cross bars 8 and 8 and the second cross bars 9 and 9. At the same time, the paired front leg levers 3 and 3 and the paired rear leg levers 5 and 5 are automatically brought to approach widthwise each other and folded by the actions in which the intersecting angles between the first cross bars 8 and 8 and the second cross bars 9 and 9 change.

Here between the lower portions of the paired front leg levers 3 and 3, there is spanned a foot rest 7 which is made of a soft resin, for example. Between the front leg levers 3 and the rear leg levers 5, on the other hand, there are spanned a pair of seat supporting levers 10 and 10. A seat portion 11, as made of a cloth or resin sheet, is spanned between the seat supporting levers 10 and 10 and the paired hand levers 2 and 2. To the paired hand levers 2 and 2, on the other hand, there are turnably hinged support levers 12 and 12, to which there is attached a canopy 13 made of a cloth or resin sheet.

Here, the folding baby carriage 1 of this embodiment is characterized in that the a self-supported leg 20 made of plastics, for example, is so attached to the lower portions of the rear leg levers 5 and 5 as can be let off to ground on the earth. The mode of the self-supported leg 20, as described herein, is just an example and can be suitably modified.

This self-supported leg 20 is constructed such that a leg trunk 22 carrying a grounding portion 21 at its leading end is turnably hinged by a rivet 24 to a leg supporting portion 23 fixed on the rear leg lever 5. The leg trunk 22 can be turned on the rivet 24 to take two upward and downward states. When the self-supported leg 20 is not used, an upper fixing portion 25 of the leg supporting portion 23 clamps and fixes the self-supported leg 20 upward. When the self-supported leg 20 is used (or let off and disposed), on the other hand, a lower fixing portion 26 of the leg supporting portion 23 clamps and fixes the self-supported leg 20 downward so that the grounding portion 21 grounds on the earth.

The grounding portion 21 is formed into a shape (or an elliptical shape in the shown embodiment) extending with a larger width than the diameter of the leg trunk 22 from the rear leg lever 5 on the mounted side toward the other rear leg lever 5, and its length is 0.5 to 1 time as large as the spacing between the paired rear leg levers 5 and 5 at the folded time.

The folding baby carriage 1 of this embodiment is enabled, when unused, to support itself at the three points of the rear wheels 6 and 6 and the self-supported leg 20 by turning the front leg levers 3 and 3 upward so as it to be folded generally in parallel with the hand levers 2 and 2, as described above, so that the rear leg levers 5 and 5 are associatively turned downward and folded generally in parallel with the hand levers 2 and 2 and so that the paired front leg levers 3 and 3 and the paired rear leg levers 5 and 5 are widthwise brought to approach each other, and then by letting off the self-supported leg 20 so that this leg 20 grounds on the earth. Therefore, the folding baby carriage 1 can be made smaller, when unused, in its occupation space and can solve the aforementioned problems of the prior art that the baby carriage or the house interior is blotted and that the baby carriage or its surrounding article is broken when the baby carriage falls down.

On the other hand, the self-supported leg 20 is so disposed that it can be let off to ground on the earth which is on the same side as the front wheels 4 and 4, which are raised by the folding operation, with respect to the hand levers 2 and 2. As described above, therefore, the folding baby carriage 1 can support itself in a substantially upright position to reduce the occupation space more.

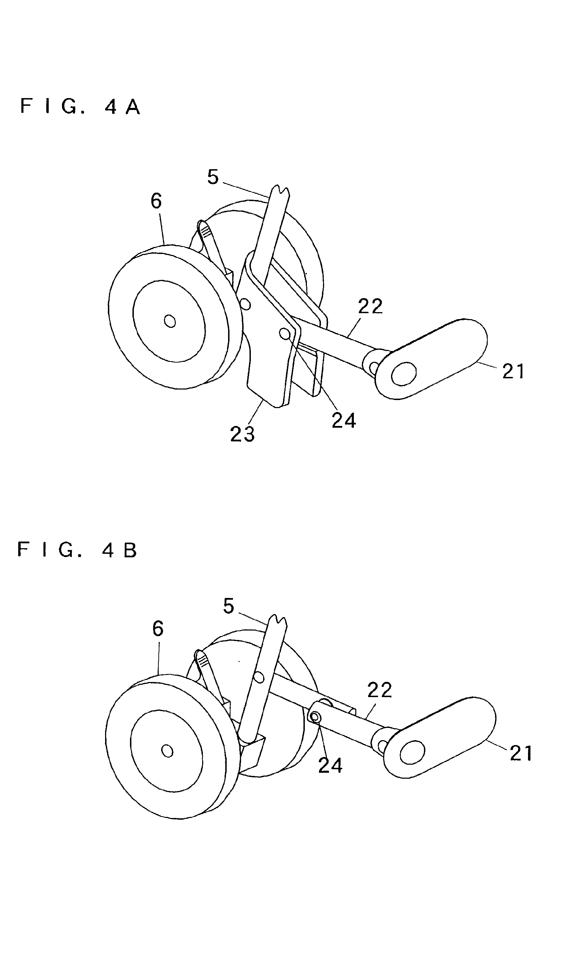

Here, the invention should not be limited to the constructions of the foregoing embodiments but can be suitably modified in the following manners without departing from the gist thereof.
(1) The material for the self-supported leg 20 can be suitably modified into metals.
(2) In the unused state, the self-supported leg 20 is fixed in a horizontal position by the leg supporting portion 23, as shown in FIG. 4A. As shown in FIG. 4B, a lever is fixed as the leg supporting portion 23 on the rear leg lever 5, and the lever trunk 22 is turnably hinged by the rivet 24, for example.

As many apparently widely different embodiments of this invention may be made without departing from the spirit and scope thereof, it is to be understood that the invention is not limited to the specific embodiments thereof except as defined in the appended claims.

A folding baby carriage comprising: a pair of front leg levers hinged turnably to be folded to the lower portions of a pair of hand levers for supporting a pair of front wheels; and a pair of rear leg levers hinged turnably to be folded to the lower portions of the paired hand levers for supporting a pair of rear wheels, the front leg levers being turned upward so that they are folded generally in parallel with the hand levers, and the rear leg levers being turned downward so that they are folded generally in parallel with the hand levers. Further comprised is a self-supported leg attached to the lower portion of the rear leg levers so that it can be let off to ground on the earth.

## Claims

1. A folding baby carriage comprising: a pair of front leg levers hinged turnably to be folded to the lower portions of a pair of hand levers for supporting a pair of front wheels; and a pair of rear leg levers hinged turnably to be folded to the lower portions of the paired hand levers for supporting a pair of rear wheels, said front leg levers being turned upward so that they are folded generally in parallel with said hand levers, and said rear leg levers being turned downward so that they are folded generally in parallel with said hand levers,
wherein the improvement comprises a self-supported leg attached to the lower portion of said rear leg levers so that it can be let off to ground on the earth.

2. A folding baby carriage according to Claim 1,
wherein said paired front leg levers are folded to approach widthwise each other and said paired rear leg levers are folded to approach widthwise each other.

3. A folding baby carriage according to Claim 1,
wherein said self-supported leg can be let off to ground on the earth which is on the same side as the front wheels, which are raised by the folding operation, with respect to said hand levers.

4. A folding baby carriage according to Claim 1,
wherein said self-supported leg is attached to the lower portion of one of said paired rear leg levers.

5. A folding baby carriage according to Claim 4,
wherein the grounding portion of said self-supported leg attached to one of said rear leg levers is shaped and extended toward the other rear leg lever.

6. A folding baby carriage according to Claim 1,
wherein said self-supported leg is let off to ground by letting off itself manually by the user to bring its grounding portion into the grounding position.

7. A folding baby carriage according to Claim 1,
wherein said self-supported leg is let off to ground such that said self-supported leg is automatically let off to ground on the earth responsively as said rear leg levers are turned downward and folded generally in parallel with said hand levers.
